(19) **Europäisches Patentamt / European Patent Office / Office européen des brevets**

(11) **EP 1 793 584 B1**

(12) **EUROPEAN PATENT SPECIFICATION**

(45) Date of publication and mention
of the grant of the patent:
**16.09.2009 Bulletin 2009/38**

(51) Int Cl.:
**H04N 1/60** (2006.01)

(21) Application number: **05026207.0**

(22) Date of filing: **01.12.2005**

(54) **White balance method**

Verfahren zum Weissabgleich

Méthode d'équilibrage de blanc

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.06.2007 Bulletin 2007/23**

(73) Proprietor: **Arima Computer Corporation Taipei 105 (TW)**

(72) Inventors:
• **Chikane, Varsha**
  **Taipei (TW)**
• **Fuh, Chiou-Shann**
  **Taipei County (TW)**
• **Hsueh, Albert**
  **Taipei (TW)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**US-A- 5 917 556**      **US-A1- 2005 122 408**

• **CHING-CHIH WENG ET AL: "A Novel Automatic White Balance Method For Digital Still Cameras" CIRCUITS AND SYSTEMS, 2005. ISCAS 2005. IEEE INTERNATIONAL SYMPOSIUM ON KOBE, JAPAN 23-26 MAY 2005, PISCATAWAY, NJ, USA, IEEE, 23 May 2005 (2005-05-23), pages 3801-3804, XP010816492 ISBN: 0-7803-8834-8**
• **PATENT ABSTRACTS OF JAPAN vol. 2000, no. 10, 17 November 2000 (2000-11-17) & JP 2000 201277 A (SHARP CORP), 18 July 2000 (2000-07-18)**
• **BO HU ET AL: "A new algorithm for automatic white balance with priori" CIRCUITS AND SYSTEMS, 2000. IEEE APCCAS 2000. THE 2000 IEEE ASIA-PACIFIC CONFERENCE ON DEC. 4-6, 2000, PISCATAWAY, NJ, USA,IEEE, 4 December 2000 (2000-12-04), pages 109-112, XP010537559 ISBN: 0-7803-6253-5**
• **LIU Y-CH ET AL: "AUTOMATIC WHITE BALANCE FOR DIGITAL STILL CAMERA" IEEE TRANSACTIONS ON CONSUMER ELECTRONICS, IEEE SERVICE CENTER, NEW YORK, NY, US, vol. 41, no. 3, 1 August 1995 (1995-08-01), pages 460-466, XP000539492 ISSN: 0098-3063**
• **CHIKANE V ET AL: "AUTOMATIC WHITE BALANCE FOR DIGITAL STILL CAMERAS" JOURNAL OF INFORMATION SCIENCE AND ENGINEERING, TAIPEI, TW, vol. 22, 23 May 2005 (2005-05-23), pages 1-13, XP009065506 ISSN: 1016-2364**

**Description**

The present invention relates in general to a white balance method for digital still cameras, and more particularly, to an automatic method to improve the white balance for digital still cameras.

In recent years, digital cameras has captured the market of cameras. Although the quality and the price are considered, consumers are more concerned about the quality of the pictures. White balance is one of the factors used to improve the quality of the pictures. The current white balance methods are incompetent to handle all possible situations in the captured scene.

Whenever a scene is captured by a digital camera, every pixel value of the recorded scene depends upon the three-sensor response which is affected by the illuminant of that scene. As an effect, a distinct color cast appears over the captured scene. Such an effect of the light source remaining on the recorded image is due to a color temperature of the corresponding light source. When a white object is illuminated with a low color temperature light source, the object in the captured image has a reddish color. Similarly, if the white object is illuminated with a high color temperature light source, the object in the captured image has a bluish color. For developing a new white balance algorithm, it is necessary to render the information about the illuminant of the scene.

The color difference caused by the "color constancy" of a human eye in different light sources can not be distinguished by the human vision. The Colors remain constant through recognition despite they are viewed under different light sources. The mechanism employed in a digital camera to compensate the color difference caused by various light sources is white balance.

Gray World Method (GWM)

Gray world assumption states that a given image with a sufficient amount of color variations is provided, then the average value of the RED, GREEN, and BLUE components of the image will be averaged into a common gray-value. By gray world method, the average reflectance value of every visible surfaces in all scenes are assumed to be gray so as to estimate the spectral distribution of the illuminants. This method is implemented by taking an image and scaling the red, green and blue color components of the image in order to maintain the assumption of the gray world method.

Perfect Reflector Method (PRM)

Perfect reflector method assumes that the RGB values of the "brightest" pixel in an image captured by a digital camera is taken to be the glossy or specular surface. For any white balancing algorithm, it is the most important to gather the information about all surfaces and the illuminant in the scene. PRM focuses on a item constructed by underlining the presence of "specularity" or the glossy surfaces in an image. The specularity is helpful to convey a good amount of the information about the illuminant. The specularities or glossy surfaces reflect the actual color of the light source as these specularities have constant reflectance functions over a wide range of wavelengths. By detecting the specularities, it is easy to find out the actual color of the light source and further to eliminate the influence of the illuminant in the scene. This method exploits the perfect reflector settings to correct the image. It also locates the reference white point by finding the pixel with the greatest luminance value and performs a white balance adjustment according to the reference white point.

Fuzzy Rules Method (FRM)

In FRM ( , Y. C. Cheng, W. H. Chan, and Y.Q. Chen, "Automatic White Balance for Digital Still Camera," IEEE Transactions on Consumer ElectronicsVolume 41, pp. 460-466, 1995), the image is converted from the RGB color space to the *YCrCb* color space so that the color's characteristics in the *YCrCb* color space for the white balance adjustment is presented. A image is divided into 8 segments by FRM to achieve a more precise white balance.

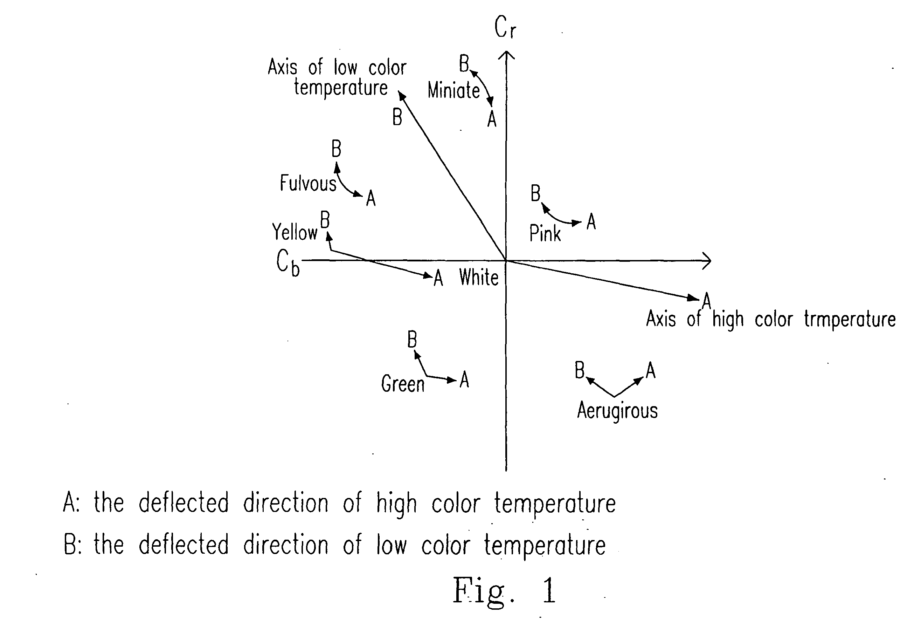

Please refer to Fig. 1, which is a diagram showing different deviations of the lights with different color temperatures. In Fig. 1, "A" represents the deflected direction of the light with a higher color temperature, and "B" represents the deflected direction of the light with a lower color temperature. The experimental figure shows some results as follows:

(a) Compared to a brighter color, a darker color has a less deviation from nominal position under different light sources. The deviation is significant on *Cr* and *Cb* components.
(b) When a white color is illuminated with different light sources, the ratio of *Cr* to *Cb* will be approximately between -1.5 to -0.5.
(c) At high luminance, the color components are easy to be saturated; while at low luminance, the color components become colorless.

According to the above-mentioned experimental results, the fuzzy rules can be concluded as follows:

(i) The averages of $Cr$ and $Cb$ for each segment will be weighted with smaller values under the conditions of higher and lower illuminations in order to avoid being saturated and being colorless.
(ii) The averages of $Cr$ and $Cb$ for each segment of darker colors are weighted less than brighter colors.
(iii) When a large object or background occupies more than one segment, its color will dominate the segment. The $Cr$ to $Cb$ ratios of adjacent segments will be similar. The given weightings of those segments with a uniform chromatic color will become smaller in order to avoid overcompensation on the color of the image.

If the $Cr$ to $Cb$ ratio of the segment is approximately between -1.5 to - 0.5, the probability of becoming a white region increases and the given weightings becomes the greatest.

Besides these basic methods, Chiou's white balance method (T. S. Chiou, "Automatic White Balance for Digital Still Camera," Master Thesis, Department of Computer Science and Information Engineering, National Taiwan University, Taiwan, 2000) has also been provided. In his method, Chiou tries to overcome the drawbacks of the basic methods.

Chiou's White Balance Method (CWBM)

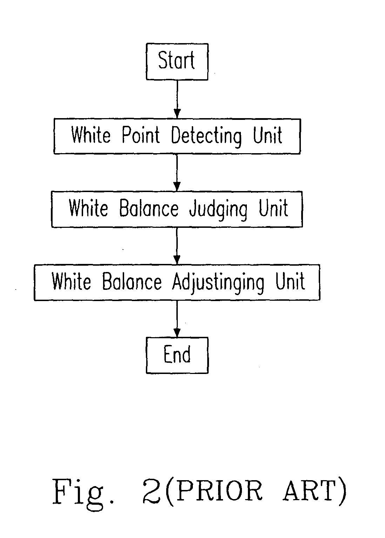

Please refer to Fig. 2, which is a block diagram of Chiou's white balance method. CWBM is composed of three units: a white point detecting unit, a white balance judging unit and a white balance adjusting unit.

In the white point detecting unit, the reference white points are detected. Firstly, the rough reference white pixels are detected. Then the image is converted from the RGB color space to the $YCrCb$ color space, and the pixels satisfying the Equation 1.1 are picked up.

$$\sqrt{C_r^2 + C_b^2} \leq CH_{th} \qquad (1.1)$$

The threshold value $CHth$ is set in 60 in the experiment. $\sqrt{C_r^2 + C_b^2}$ is the chromaticity value.

Secondly, the pixels satisfying the Equation 1.2 among the rough reference white pixels are selected as precise reference white pixels.

$$R \geq R_{th}, G \geq G_{th}, B \geq B_{th}$$
$$|C_r| \leq AB_r, |C_b| \leq AB_b$$
$$R_l \leq C_r / C_b \leq R_u$$

$Rth$ , $Gth$ , and $Bth$ are the threshold value picked up from the eightieth percentile of each component histogram. $ABr$ (= 45), $ABb$ (= 45) are the absolute values of $Cr, Cb$ respectively. $Rl$ (= - 1.25), $Ru$ (= - 0.75) are the lower and upper range of the $Cr$ to $Cb$ ratio.

Finally, the averages of rough reference white pixels and precise reference white pixels are calculated as ($Rr, Gr, Br$) and ($Rp, Gp, Bp$) respectively.

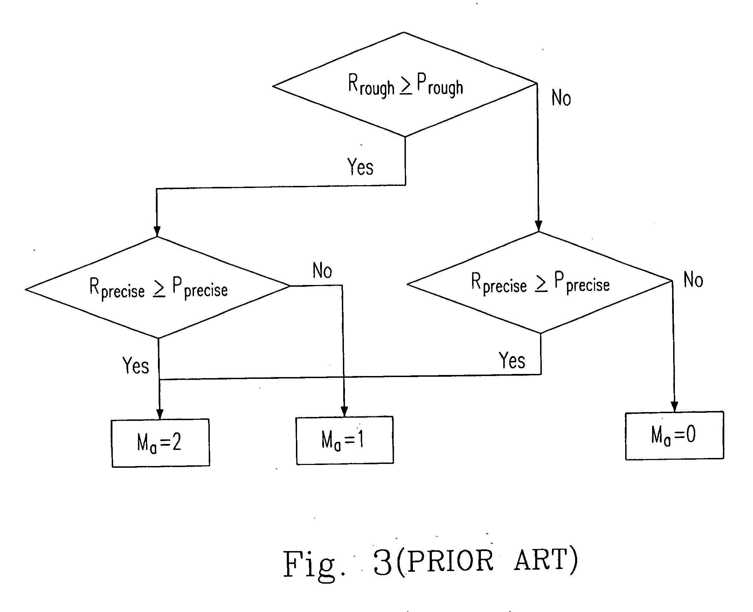

The white balance judging unit judges whether or not to apply the white balance on the desired image then choose the reference white point data from the white point detecting unit. Firstly, $Rrough$ and $Rprecise$ are calculated, wherein $Rrough$ is the ratio of rough reference white pixels to all pixels of the image and $Rprecise$ is the ratio of precise reference white pixels to all pixels of the image. Secondly, $Rrough$ is determined if it is greater than or equal to $Rprecise$ and defined as a prescribed proportion, which is 0.2 in the experiment. Then $Rprecise$ is determined if it is greater or equal to $Pprecise$ and defined as another prescribed proportion, which is 0.05 in the experiment. Finally, a mode $Ma$ which shows the flow of CWBM is set in the value 0, 1 and 2 as shown in Fig. 3.

The white balance adjusting unit adjusts the white balance according to the mode $Ma$. The rough reference white point ($Rrgain, Grgain, Brgain$) or the precise reference white point ($Rpgain, Gpgain, Bpgain$) is calculated to obtain the scale factors. If $Ma$ is set in the value 2, then white balance is adjusted according to the precise reference white point ($Rpgain, Gpgain, Bpgain$). If $Ma$ is set in the value 1, then the minors between ($Rrgain, Grgain, Brgain$) and ($Rpgain, Gpgain, Bpgain$) is chosen. However, no white balance adjustment is applied if $Ma$ is set in the value 0.

For adjusting the extreme scale factors towards acceptable values, a sigmoid function shown in Equation 1.3 is used.

$$Y = 1.05 * (1 + \tanh(X - 1.25)) + 0.4 \qquad (1.3)$$

In Equation 1.3, $X$ is an original scale factor and $Y$ is an adjusted scale factor.

Although the above-mentioned GWM, PRM, FRM, and CWBA methods are provided. Some problems still can not be avoided. The most serious problem is the bad consistency of colors in the image resulting from the adjusted white balance.

It is therefore attempted by the applicant to deal with the above situation encountered in the prior art.

It is the main object of the present invention to provide an automatic white balance method for digital still cameras. The white point can be detected in extremely high accuracy with this method. Compared to the traditional methods, a better image can be formed in digital still cameras.

According to the main object of the present invention, a white balance method for an image formed by a digital still camera is provided as defined in claim 1. The white balance method comprises steps of: removing a color cast over a white object of the image; detecting a reference white point from the image by extracting an a pixel information of the white object; and adjusting a white balance of the white object by determining a scale factor based on the color cast and the pixel information.

The above objects and advantages of the present invention will become more readily apparent to those ordinarily skilled in the art after reviewing the following detailed descriptions and accompanying drawings, in which:

FIG. 1 is a diagram showing different deviations of the lights with different color temperatures;
FIG. 2 is a block diagram of Chiou's white balance method;
FIG. 3 is a flow chart of Chiou's white balance method;
FIG. 4 is a flow chart of the automatic white balance method according to the present invention;
FIG. 5 is a flow chart of the step of white object purification according to the present invention;
FIG. 6 is a flow chart of the step of candidate white pixels detection according to the present invention;
FIG. 7 is a flowchart of the step of white point detection 200; and
FIG. 8 is a flow chart of the step of white balance adjustment 300 according to the present invention.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

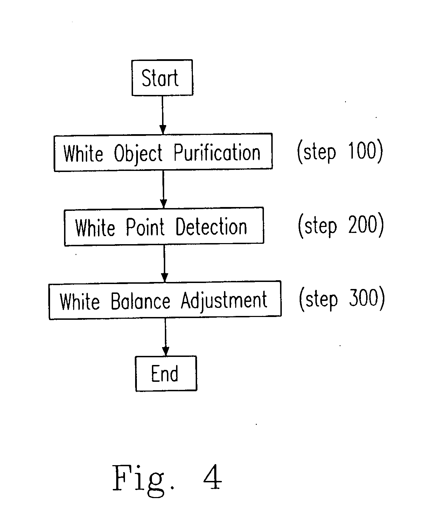

Please refer to FIG. 4, which is the flow chart of the automatic white balance method according to the present invention. The steps of the white balance method includes three steps: a white object purification 100, a white point detection 200 and a white balance adjustment 300. According to the observations based on the experiment, if a white object is purified, then it is easy to detect the white point from the images. For this purpose, a histogram equalization is applied on the desired image and the pixel information belonging to the white point is extracted. Then the information can be utilized to select the white point from the original image.

### White Object Purification

The step of white object purification 100 purifies a white object so that a color cast over the white object is removed. By applying the histogram equalization on the RGB channels separately, the color cast over the white object can be removed. Hence the next step of white object detection 200 will become easier.

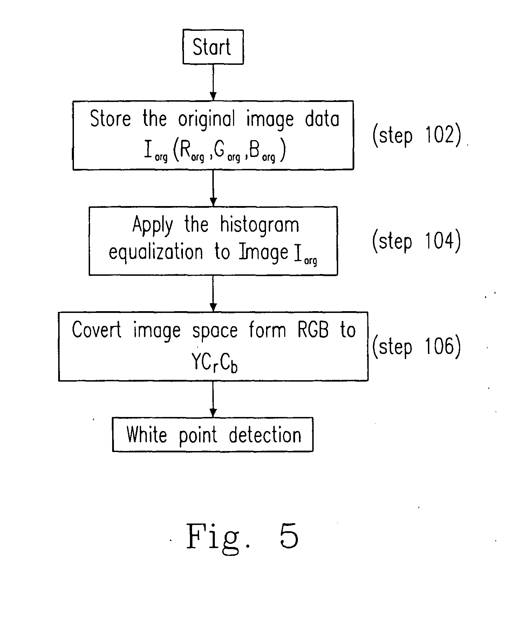

Please refer to Fig. 5, which is the flow chart of the step of white object purification 100 according to the present invention. First, the original image data *Iorg* (*Rorg, Gorg, Borg*) is stored in step 102. Next, the histogram equalization is performed to each RGB channel in step 104. For further processing, the Histogram is applied to equalize the image data in *YCrCb* color space in step 106.

### White Point Detection

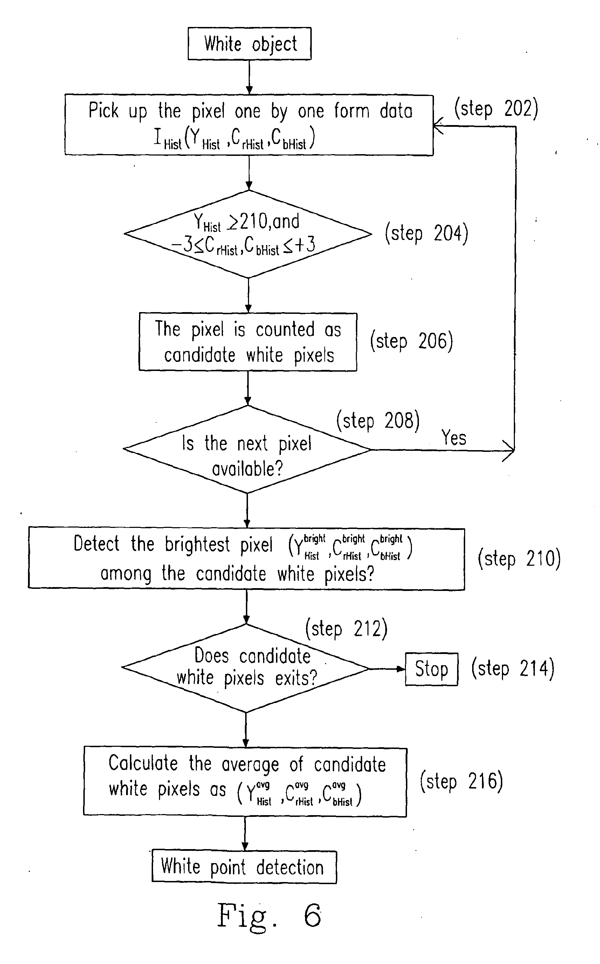

Please refer to Fig. 6, which is the flow chart of the step of candidate white pixels detection according to the present invention. In step 200, we make use of the histogram-equalized image data $I_{Hist}$ ($Y_{Hist}$, $C_{rHist}$, $C_{bHist}$) in YCrCb color space, which is converted from the original image data *Iorg*. In step 202, all pixels are picked up from the histogram-equalized image data $I_{Hist}$ one by one. Next, in step 204 and 206, the white pixels in the histogram-equalized image data $I_{Hist}$ are tested with Equation 1.4 to determine all candidate white pixels until all pixels are tested, as shown in step 208.

$$Y_{Hist} \geq 210, \text{ and}$$
$$-3 \leq C_{r\,Hist}, C_{b\,Hist} \leq +3 \qquad (1.4)$$

In order to calculate the average of the selected candidate white pixels as

$(\quad Y_{Hist}^{avg} \quad, \quad C_{rHist}^{avg} \quad, \quad C_{bHist}^{avg} \quad)$ in step 216, a relatively brightest pixel $(Y_{Hist}^{bright}, C_{rHist}^{bright}, C_{bHist}^{bright})$ must be

found out first. The relatively brightest pixel has a relatively maximum $Y_{Hist}$ value and has CrHist and CbHist values which are relatively closest to zero, as shown in step 210. The process will finally stop if no candidate white pixels are detected, as shown in step 214. In step 216, the candidate white pixels are calculated to obtain the average pixel

$(\ (Y_{Hist}^{avg}, \ C_{rHist}^{avg}, \ C_{bHist}^{avg}).$

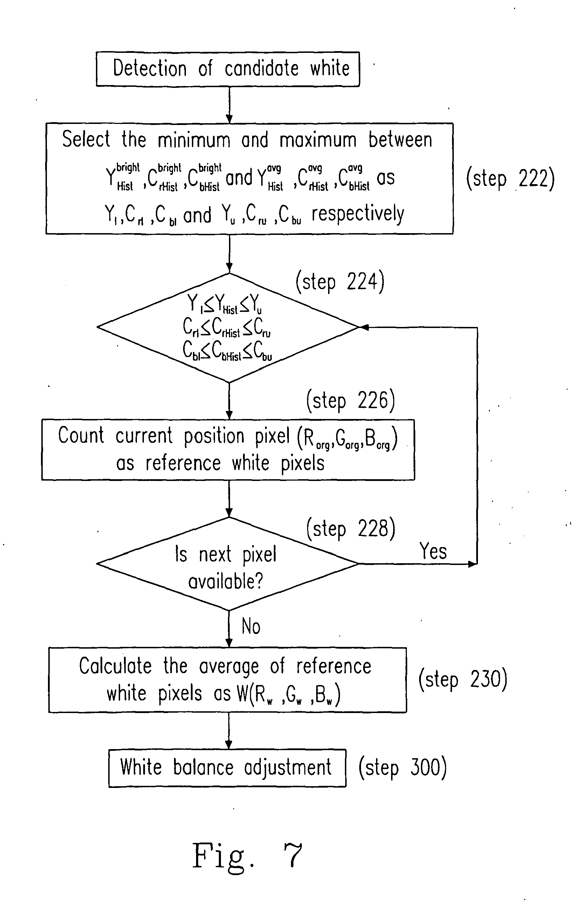

Please refer to Fig. 7, which is the flowchart of the step of white point detection 200. After the detection of the candidate white pixels, all reference white pixels satisfyin Equation 1.5 will be picked up from the histogram-equalized image data $I_{Hist}$, as shown in step 224. The rules of picking up are listed in step 222; that is, $Y_l$ and $Y_u$ are a relatively

maximum value and a relatively minimum value of a range from $Y_{Hist}^{bright}$ and $Y_{Hist}^{avg}$ respectively, $C_{rl}$ and $C_{cu}$ are a relatively maximum value and a relatively minimum value of a range from $C_{rHist}^{bright}$ and $C_{rHist}^{avg}$ respectively, and $C_{bl}$

and $C_{bu}$ are a relatively maximum value and a relatively minimum value of a range from $C_{bHist}^{bright}$ and $C_{bHist}^{avg}$ respectively.

If the pixels, in step 224, from the histogram-equalized image data *Iorg* satisfy Equation 1.5, then select the corresponding position pixels from the original RGB color space image data as the reference white pixels as in step 226 until all pixels are determined as in step 228.

Finally, in step 230 the average of those reference white pixels is calculated as $W(R_w, G_w, B_w)$. The collected white balance data are then transferred to the step of white balance adjustment 300.

White Balance Adjustment

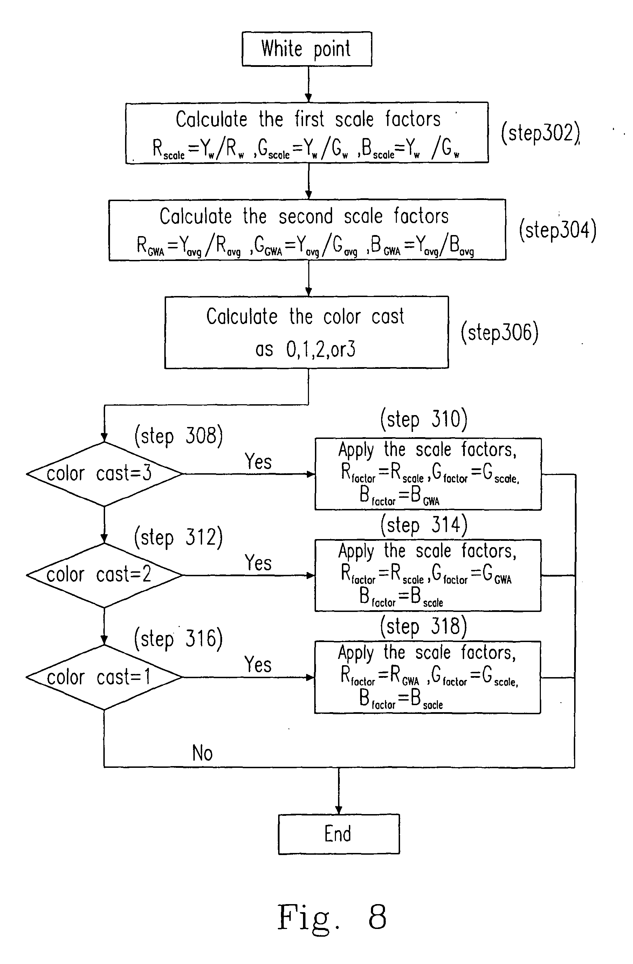

Please refer to Fig. 8, which is the flow chart of the step of white balance adjustment 300 according to the present invention. After collecting data from the white point detection procedure 200, the white balance adjustment is then proceeded. In step 302, a first scale factor ($R_{scale}$, $G_{scale}$, $B_{scale}$) is calculated according to the reference white point $W(R_w, G_w, B_w)$ for the respective color component with Equation 1.6.

$$R_{scale} = Y_w / R_w$$
$$G_{scale} = Y_w / G_w \qquad (1.6)$$
$$B_{scale} = Y_w / B_w$$

$Y_w$ is calculated with Equation 1.7.

$$Y_w = 0.299 * R_w + 0.587 * G_w + 0.114 * B_w \qquad (1.7)$$

Next, in step 304, a second scale factor ($R_{GWA}$, $G_{GWA}$, $B_{GWA}$) is calculated with Equation 1.8.

$$R_{GWA} = Y_{avg} / R_{avg}$$
$$G_{GWA} = Y_{avg} / G_{avg}$$
$$B_{GWA} = Y_{avg} / B_{avg} \qquad (1.8)$$

$Y_{avg}$ is calculated with Equation 1.9.

$$Y_{avg} = 0.299 * R_{avg} + 0.587 * G_{avg} + 0.114 * B_{avg} \qquad (1.9)$$

$R_{avg}$, $G_{avg}$ and $B_{avg}$ are the average color components of the original image data $I_{org}$ ($R_{org}$, $G_{org}$, $B_{org}$) respectively.

Finally, in step 306, decisions are made for selecting the proper scale factors based on the color cast over the desired image. For determining the color cast over the image, the average values of the candidate white pixels ( $Y_{Hist}^{avg}$, $C_{rHist}^{avg}$, $C_{bHist}^{avg}$ ) must be converted from the *YCrCb* color space to the RGB color space into ( $R_{Hist}^{avg}$, $G_{Hist}^{avg}$, $B_{Hist}^{avg}$ ). Next, with Equations from 1.0 to 1.12 the bluish color cast (step 308), the greenish color cast (step 312) and the reddish color casts (step 316) can be decided respectively. Although these equations are determined by observations, it is still consistent to make use of them to find the desired color casts over the image.

$$B_{Hist}^{avg} + 3 \geq G_{Hist}^{avg} \text{ and } B_{Hist}^{avg} > R_{Hist}^{avg} \qquad (1.10)$$

$$G_{Hist}^{avg} + 3 > R_{Hist}^{avg} > B_{Hist}^{avg} \qquad (1.11)$$

$$R_{Hist}^{avg} > G_{Hist}^{avg} > B_{Hist}^{avg} \qquad (1.12)$$

After finding the color casts, the first and second scale factors are applied. In case of the bluish cast, the scale factors are taken as Equation 1.13 shows. That is, the first scale factor gives the R component and the G component. The second scale factor gives the B component. The color cast is 3 as steps 308 and 310 show.

$$R_{factor} = R_{scale}$$
$$G_{factor} = G_{scale}$$
$$B_{factor} = B_{GWA} \qquad (1.13)$$

In case of the greenish cast, the scale factors are taken as Equation 1.14 shows. That is, the first scale factor gives the R component and the B component. The second scale factor gives the G component. The color cast is 2 as steps 312 and 314 show.

$$R_{factor} = R_{scale}$$
$$G_{factor} \doteq G_{GWA} \qquad (1.14)$$
$$B_{factor} = B_{Scale}$$

In case of the reddish cast, the scale factors are taken as Equation 1.15 shows. That is, the first scale factor gives the G component and the B component. The second scale factor gives the R component. The color cast is 1 as steps 316 and 318 show.

$$R_{factor} = R_{GWA}$$
$$G_{factor} = G_{scale} \qquad (1.15)$$
$$B_{factor} = B_{scale}$$

With the color cast, the white balance of the image can be achieved accurately. An image of consistent colors is then shown on the digital still camera.

According to the prior arts, the above-mentioned GWM, PRM, FRM and CWBA methods can not avoid some serious problems, especially the destroyed consistency of colors in the image while white balance is proceeding. The present invention utilizes the color cast finding equations and, in some conditions, makes the decisions of rejections. With or without applying white balance adjustment, the present invention can avoid those problems. Besides, in some situations, such as a greenhouse, applying any white balance algorithm may result in the bluish color cast instead of the removeof the original color cast. The present invention also gets rid of such problems. Under natural light sources and household lights the present invention performs extremely well.

The experimental results of the present invention show the best performance in the applications of both objectives and subjective evaluations. Experiments also show the stability of the present invention in removing the color cast over the scene under object-varying situations. Besides, the light-varying conditions are also considered by capturing the same scene under different light sources and the results remains stable. The present invention is applicable to the white balance about the so-called moving pictures. With reference to the white balance of a single brightest pixel, which is still the main drawback of PRM method, the present invention also overcome it. By the use of some range with which the step of finding the brightest pixel is performed, the detected brightest pixel will always belong to the white color. The present invention works under all possible situations because of the brightest pixel is used for finding the range to detect the white pixels under the color cast. In sum, the present invention either removes the color cast completely or stops for white balance adjustment. Complexity of the present invention is also acceptable.

**Claims**

1.    A white balance method for an image formed by a digital still camera, comprising steps of:

(a) removing a color cast over a white object of said image (step 100) , comprising steps of:

storing an original image data $I_{org}$ ($R_{org}$, $G_{org}$, $B_{org}$) of said image (step 102);
performing a histogram equalization for said original image data $I_{org}$ (step 104); and
converting said original image data $I_{org}$ from an $RGB$ color space to a $YC_rC_b$ color space so as to obtain a histogram-equalized image data $I_{Hist}$ ($Y_{Hist}$, $C_{rHist}$, $C_{bHist}$) (step 106);

(b) detecting a reference white point from said image by extracting a pixel information of said white object, comprising steps of:

determining all candidate white pixels from said histogram-equalized image data $I_{Hist}$ with an equation (I) (step 204):

$$Y_{Hist} \geq 210, \quad and \qquad (1);$$
$$-3 \leq C_{rHist}, C_{bHist} \leq +3$$

obtaining a relatively brightest pixel $(Y_{Hist}^{bright}, C_{rHist}^{bright}, C_{bHist}^{bright})$ from said candidate white pixels, wherein said relatively brightest pixel has a relatively maximum $Y_{Hist}$ value and has $C_{rHist}$ and $C_{bHist}$ values being relatively closest to zero (step 210);

calculating an average pixel $(Y_{Hist}^{avg}, C_{rHist}^{avg}, C_{bHist}^{avg})$ of said candidate white pixels (step 216);

determining all reference white pixels from said *RGB* color space if corresponding pixels thereof from said histogram-equalized image data $I_{Hist}$ satisfy equation (2) (step 224):

$$Y_l \leq Y_{Hist} \leq Y_u$$
$$C_{rl} \leq C_{rHist} \leq C_{ru} \qquad (2),$$
$$C_{bl} \leq C_{bHist} \leq C_{bu}$$

wherein $Y_l$ and $Y_u$ are a relatively maximum value and a relatively minimum value of said $Y_{Hist}^{bright}$ and said $Y_{Hist}^{avg}$ respectively, $C_{rl}$ and $C_{cu}$ are a relatively maximum value and a relatively minimum value of said $C_{rHist}^{bright}$ and said $C_{rHist}^{avg}$ respectively, and $C_{bl}$ and $C_{bu}$ are a relatively maximum value and a relatively minimum value of said $C_{bHist}^{bright}$ and said $C_{bHist}^{avg}$ respectively; and

calculating an average $W(R_w, G_w, B_w)$ of said reference white pixels as said pixel information (step 230); and

(c) adjusting a white balance of said image by determining a scale factor based on said color cast and said pixel information (step 300).

2. The white balance method according to claim 1, wherein said step (c) further comprises steps of:

calculating a first scale factor ($R_{scale}$, $G_{scale}$, $B_{scale}$) from said average $W(R_w, G_w, B_w)$ of said reference white pixels with equations (3) and (4) (step 302):

$$R_{scale} = Y_w / R_w$$
$$G_{scale} = Y_w / G_w \qquad (3)$$
$$B_{scale} = Y_w / B_w$$

$$Y_w = 0.299 * R_w + 0.587 * G_w + 0.114 * B_w \qquad (4);$$

and
calculating a second scale factor ($R_{GWA}$, $G_{GWA}$, $B_{GWA}$) with equations (5) and (6) (step 304):

$$R_{GWA} = Y_{avg} / R_{avg}$$
$$G_{GWA} = Y_{avg} / G_{avg} \qquad (5)$$
$$B_{GWA} = Y_{avg} / B_{avg}$$

$$Y_{avg} = 0.299 * R_{avg} + 0.587 * G_{avg} + 0.114 * B_{avg} \qquad (6),$$

wherein $R_{avg}$, $G_{avg}$, and $B_{avg}$ are average color components of said original image date $I_{org}$ ($R_{org}$, $G_{org}$, $B_{org}$), respectively,

3. The white balance method according to claim2, further comprising steps of:

determining said color cast as being bluish if $B_{Hist}^{avg} + 3 \geq G_{Hist}^{avg}$ and $B_{Hist}^{avg} > R_{Hist}^{avg}$,

wherein ($R_{Hist}^{avg}$, $G_{Hist}^{avg}$, $B_{Hist}^{avg}$) is obtained by converting said average pixel ($Y_{Hist}^{avg}$, $C_{rHist}^{avg}$, $C_{bHist}^{avg}$) of said candidate white pixels from said $YC_rC_b$ color space to said $RGB$ color space (step 306 and 308); and

taking ($R_{scale}$, $G_{scale}$, $B_{GWA}$) as said scale factor (step 310).

4. The white balance method according to claim2, further comprising steps of:

determining said color cast as being reddish if $G_{Hist}^{avg} + 3 > R_{Hist}^{avg} > B_{Hist}^{avg}$, wherein

($R_{Hist}^{avg}$, $G_{Hist}^{avg}$, $B_{Hist}^{avg}$) is obtained by converting said average pixel ($Y_{Hist}^{avg}$, $C_{rHist}^{avg}$, $C_{bHist}^{avg}$) of said candidate white pixels from said $YC_rC_b$ color space to said $RGB$ color space (step 306 and 312); and

taking ($R_{GWA}$, $G_{scale}$, $B_{scale}$) as said scale factor (step 314).

5. The white balance method according to claim2, further comprising steps of:

determining said color cast as being greenish if $R_{Hist}^{avg} > G_{Hist}^{avg} > B_{Hist}^{avg}$, wherein ($R_{Hist}^{avg}$, $G_{Hist}^{avg}$, $B_{Hist}^{avg}$)

is obtained by converting said average pixel ($Y_{Hist}^{avg}$, $C_{rHist}^{avg}$, $C_{bHist}^{avg}$) of said candidate white pixels from said
$YC_rC_b$ color space to
said $RGB$ color space (step 306 and 316); and
taking ($R_{scale}$, $G_{GWA}$, $B_{scale}$) as said scale factor (step 318).

**Patentansprüche**

1. Ein Weißabgleichverfahren für ein durch eine digitale Standbildkamera erzeugtes Bild, mit folgenden Schritten:

(a) Entfernen einer Farbnuance über ein Weiß-Objekt des Bilds (Schritt 100), mit folgenden Schritten:

Speichern ursprünglicher Bilddaten $I_{org}$ ($R_{org}$, $G_{org}$, $B_{org}$) des Bildes (Schritt 102);
Durchführen eines Histogrammausgleichs für die ursprünglichen Bilddaten $I_{org}$ (Schritt 104); und
Umwandeln der ursprünglichen Bilddaten $I_{org}$ von einem $RGB$-Farbraum in einen $YC_rC_b$-Farbraum, um Histogramm-ausgeglichene Bilddaten $I_{Hist}$ ($Y_{Hist}$, $C_{rHist}$, $C_{bHist}$) zu erhalten (Schritt 106);

(b) Erfassen eines Weiß-Referenzpunkts aus dem Bild durch ein Extrahieren einer Pixelinformation des Weiß-Objekts mit folgenden Schritten:

Bestimmen aller Weiß-Kandidatenpixel aus den Histogramm-ausgeglichenen Bilddaten $I_{Hist}$ mit einer Gleichung (1) (Schritt 204):

$$Y_{Hist} \geq 210 \quad und$$
$$-3 \leq C_{rHist}, C_{bHist} \leq +3 \qquad (1);$$

Erhalten eines relativ hellsten Pixels $\left( Y_{Hist}^{bright}, C_{rHist}^{bright}, C_{bHist}^{bright} \right)$ aus den Weiß-Kandidatenpixeln, wobei das relativ hellste Pixel einen relativ maximalen $Y_{Hist}$-Wert aufweist und $C_{rHist}$- und $C_{bHist}$-Werte aufweist, die relativ am nächsten an Null liegen (Schritt 210);

Berechnen eines Durchschnittspixels $\left( Y_{Hist}^{avg}, C_{rHist}^{avg}, C_{bHist}^{avg} \right)$ der Weiß-Kandidatenpixel (Schritt 216);

Bestimmen aller Weiß-Referenzpixel aus dem *RGB*-Farbraum, falls entsprechende Pixel desselben aus den Histogramm-ausgeglichenen Bilddaten $I_{Hist}$ Gleichung (2) erfüllen (Schritt 224):

$$Y_l \leq Y_{Hist} \leq Y_u$$
$$C_{rl} \leq C_{rHist} \leq C_{ru} \qquad (2),$$
$$C_{b1} \leq C_{bHist} \leq C_{bu}$$

wobei $Y_l$ *und* $Y_u$ ein relativ maximaler Wert und ein relativ minimaler Wert von $Y_{Hist}^{bright}$ beziehungsweise von $Y_{Hist}^{avg}$ sind, $C_{rl}$ und $C_{cu}$ ein relativ maximaler Wert und ein relativ minimaler Wert von $C_{rHist}^{bright}$ beziehungsweise von $C_{rHist}^{avg}$ sind, und $C_{bl}$ und $C_{bu}$ ein relativ maximaler Wert und ein relativ minimaler Wert von $C_{bHist}^{bright}$ beziehungsweise von $C_{bHist}^{avg}$ sind; und

Berechnen eines *Durchschnitts W* ($R_w$, $G_w$, $B_w$) der Weiß-Referenzpixel als die Pixelinformationen (Schritt 230); und

(c) Einstellen eines Weißabgleichs des Bilds durch ein Bestimmen eines Skalenfaktors basierend auf der Farbnuance und den Pixelinformationen (Schritt 300).

**2.** Das Weißabgleichverfahren gemäß Anspruch 1, bei dem der Schritt (c) ferner folgende Schritte aufweist:

Berechnen eines ersten Skalenfaktors ($R_{scale}$, $G_{scale}$, $B_{scale}$) aus dem Durchschnitt $W(R_w$, $G_w$, $B_w)$ der Weiß-Referenzpixel mit Gleichungen (3) und (4) (Schritt 302):

$$R_{scale} = Y_w / R_w$$
$$G_{scale} = Y_w / G_w \qquad (3)$$
$$B_{scale} = Y_w / B_w$$

$$Y_w = 0{,}299 * R_w + 0{,}587 * G_w + 0{,}114 * B_w \qquad (4);$$

und

Berechnen eines zweiten Skalenfaktors ($R_{GWA}$, $G_{GWA}$, $B_{GWA}$) mit Gleichungen (5) und (6) (Schritt 304):

$$
\begin{aligned}
R_{GWA} &= Y_{avg} / R_{avg} \\
G_{GWA} &= Y_{avg} / G_{avg} \qquad (5) \\
B_{GWA} &= Y_{avg} / B_{avg}
\end{aligned}
$$

$$Y_{avg} = 0{,}299 * R_{avg} + 0{,}587 * G_{avg} + 0{,}114 * B_{avg} \qquad (6),$$

wobei $R_{avg}$, $G_{avg}$ und $B_{avg}$ jeweilige Durchschnittsfarbkomponenten der ursprünglichen Bilddaten $I_{org}$ ($R_{org}$, $G_{org}$, $B_{org}$) sind.

3. Das Weißabgleichverfahren gemäß Anspruch 2, das ferner folgende Schritte aufweist:

Bestimmen der Farbnuance als bläulich, falls $B_{Hist}^{avg} + 3 \geq G_{Hist}^{avg}$ und $B_{Hist}^{avg} > R_{Hist}^{avg}$ gilt, wobei $\left( R_{Hist}^{avg}, G_{Hist}^{avg}, B_{Hist}^{avg} \right)$ durch ein Umwandeln des Durchschnittspixels $\left( Y_{Hist}^{avg}, C_{rHist}^{avg}, C_{bHist}^{avg} \right)$ der Weiß-Kandidatenpixel von dem $YC_rC_b$-Farbraum in den RGB-Farbraum erhalten wird (Schritt 306 und 308); und

Nehmen von ($R_{scale}$, $G_{scale}$, $B_{GWA}$) als den Skalenfaktor (Schritt 310).

4. Das Weißabgleichverfahren gemäß Anspruch 2, das ferner folgende Schritte aufweist:

Bestimmen der Farbnuance als rötlich, falls $G_{Hist}^{avg} + 3 > R_{Hist}^{avg} > B_{Hist}^{avg}$ gilt, wobei $\left( R_{Hist}^{avg}, G_{Hist}^{avg}, B_{Hist}^{avg} \right)$ durch ein Umwandeln des Durchschnittspixels $\left( Y_{Hist}^{avg}, C_{rHist}^{avg}, C_{bHist}^{avg} \right)$ der Weiß-Kandidatenpixel von dem $YC_rC_b$-Farbraum in den RGB-Farbraum erhalten wird (Schritt 306 und 312); und

Nehmen von ($R_{GWA}$, $G_{scale}$, $B_{scale}$) als den Skalenfaktor (Schritt 314).

5. Das Weißabgleichverfahren gemäß Anspruch 2, das ferner folgende Schritte aufweist:

Bestimmen der Farbnuance als grünlich, falls $R_{Hist}^{avg} > G_{Hist}^{avg} > B_{Hist}^{avg}$ gilt, wobei $\left( R_{Hist}^{avg}, G_{Hist}^{avg}, B_{Hist}^{avg} \right)$ durch ein Umwandeln des Durchschnittspixels $\left( Y_{Hist}^{avg}, C_{rHist}^{avg}, C_{bHist}^{avg} \right)$ der weißen Kandidatenpixel von dem $YC_rC_b$-Farbraum in den RGB-Farbraum erhalten wird (Schritt 306 und 316); und

Nehmen von ($R_{scale}$, $G_{GWA}$, $B_{scale}$) als den Skalenfaktor (Schritt 318).

## Revendications

1. Méthode d'équilibrage de blanc pour une image formée par un appareil photo numérique, comprenant les étapes consistant à:

(a) éliminer un filtre coloré sur un objet blanc de ladite image (étape 100), comprenant les étapes consistant à:

mémoriser les données d'image originales $I_{org}$ ($R_{org}$, $G_{org}$, $B_{org}$) de ladite image (étape 102);
effectuer une égalisation d'histogramme pour lesdites données d'image originales $I_{org}$ (étape 104); et
convertir lesdites données d'image originales $I_{org}$ d'un espace de couleurs *RGB* à un espace de couleurs $YC_rC_b$, de manière à obtenir des données d'image à histogramme égalisé $I_{Hist}$ ($Y_{Hist}$, $C_{rHist}$, $C_{bHist}$) (étape 106);

(b) détecter un point blanc de référence à partir de ladite image en extrayant une information de pixels dudit objet blanc, comprenant les étapes consistant à:

déterminer tous les pixels blancs candidats à partir desdites données d'image à histogramme égalisé $I_{Hist}$ par une équation (1) (étape 204):

$$Y_{Hist} \geq 210, \, et$$
$$-3 \leq C_{rHist} . C_{bHist} \leq +3 \qquad (1);$$

obtenir un pixel relativement le plus clair $\left( Y_{Hist}^{bright}, C_{rHist}^{bright}, C_{bHist}^{bright} \right)$ parmi lesdits pixels blancs candidats, où ledit pixel relativement le plus clair a une valeur $Y_{Hist}$ relativement maximale et a des valeurs $C_{rHist}$ et $C_{bHist}$ relativement les plus proches de zéro (étape 210);

calculer un pixel moyen $\left( Y_{Hist}^{avg}, C_{rHist}^{avg}, C_{bHist}^{avg} \right)$ desdits pixels blancs candidats (étape 216);

déterminer tous les pixels blancs de référence à partir dudit espace de couleurs *RGB* si des pixels correspondants de celui-ci à partir desdites données d'image à histogramme égalisé $I_{Hist}$ remplissent l'équation (2) (étape 224):

$$Y_l \leq Y_{Hist} \leq Y_u$$
$$C_{rl} \leq C_{rHist} \leq C_{ru} \qquad (2),$$
$$C_{bl} \leq C_{bHist} \leq C_{bu}$$

où $Y_l$ et $Y_u$ sont une valeur relativement maximale et une valeur relativement minimale respectivement dudit $Y_{Hist}^{bright}$ et dudit $Y_{Hist}^{avg}$, $C_{rl}$ et $C_{ru}$ sont une valeur relativement maximale et une valeur relativement minimale respectivement dudit $C_{rHist}^{bright}$ et dudit $C_{rHist}^{avg}$, et $C_{bl}$ et $C_{bu}$ sont une valeur relativement maximale et une valeur relativement minimale respectivement dudit $C_{bHist}^{bright}$ et dudit $C_{bHist}^{avg}$; et

calculer une moyenne $W$($R_w$, $G_w$, $B_w$) desdits pixels blancs de référence comme étant ladite information de pixel (étape 230); et

(c) ajuster un équilibre de blanc de ladite image en déterminant un facteur d'échelle sur base dudit filtre coloré et de ladite information de pixels (étape 300).

2. Méthode d'équilibrage de blanc selon la revendication 1, dans laquelle ladite étape (c) comprend par ailleurs les étapes consistant à:

calculer un premier facteur d'échelle ($R_{scale}$, $G_{scale}$, $B_{scale}$) à partir de ladite moyenne desdits pixels blancs de référence par les équations (3) et (4) (étape 302):

$$R_{scale} = Y_w / R_w$$
$$G_{scale} = Y_w / G_w \qquad (3)$$
$$B_{scale} = Y_w / B_w$$

$$Y_w = 0.299*R_w + 0.587*G_w + 0.114*B_w \qquad (4);$$

et

calculer un deuxième facteur d'échelle ($R_{GWA}$, $G_{GWA}$, $B_{GWA}$) par les équations (5) et (6) (étape 304):

$$R_{GWA} = Y_{AVG} / R_{AVG}$$
$$G_{GWA} = Y_{AVG} / G_{AVG} \qquad (5)$$
$$B_{GWA} = Y_{AVG} / B_{AVG}$$

$$Y_{avg} = 0.299*R_{avg} + 0.587*G_{avg} + 0.114*B_{avg} \qquad (6),$$

où $R_{avg}$, $G_{avg}$ et $B_{avg}$ sont des composantes de couleur moyennes respectivement desdites données d'image originales $I_{org}$ ($R_{org}$, $G_{org}$, $B_{org}$).

3. Méthode d'équilibrage de blanc selon la revendication 2, comprenant par ailleurs les étapes consistant à:

déterminer ledit filtre coloré comme étant bleuâtre si $B_{Hist}^{avg} + 3 \geq G_{Hist}^{avg}$ et $B_{Hist}^{avg} > R_{Hist}^{avg}$,

où $\left( R_{Hist}^{avg}, G_{Hist}^{avg}, B_{Hist}^{avg} \right)$ est obtenu en convertissant ledit pixel moyen $\left( Y_{Hist}^{avg}, C_{rHist}^{avg}, C_{bHist}^{avg} \right)$ desdits pixels blancs candidats dudit espace de couleurs $YC_rC_b$ audit espace de couleurs $RGB$ (étape 306 et 308); et prendre ($R_{scale}$, $G_{scale}$, $B_{GWA}$) comme dit facteur d'échelle (étape 310).

4. Méthode d'équilibrage de blanc selon la revendication 2, comprenant par ailleurs les étapes consistant à:

déterminer ledit filtre coloré comme étant rougeâtre si $G_{Hist}^{avg} + 3 > R_{Hist}^{avg} > B_{Hist}^{avg}$, où $\left( R_{Hist}^{avg}, G_{Hist}^{avg}, B_{Hist}^{avg} \right)$ est obtenu en convertissant ledit pixel moyen $\left( Y_{Hist}^{avg}, C_{rHist}^{avg}, C_{bHist}^{avg} \right)$ desdits pixels blancs candidats dudit espace de couleurs $YC_rC_b$ audit espace de couleurs $RGB$ (étape 306 et 312); et prendre ($R_{GWA}$, $G_{scale}$, $B_{scale}$) comme dit facteur d'échelle (étape 314).

5. Méthode d'équilibrage de blanc selon la revendication 2, comprenant par ailleurs les étapes consistant à:

déterminer ledit filtre coloré comme étant verdâtre si $R_{Hist}^{avg} > G_{Hist}^{avg} > B_{Hist}^{avg}$, où $\left( R_{Hist}^{avg}, G_{Hist}^{avg}, B_{Hist}^{avg} \right)$ est obtenu en convertissant ledit pixel moyen $\left( Y_{Hist}^{avg}, C_{rHist}^{avg}, C_{bHist}^{avg} \right)$ desdits pixels blancs candidats dudit espace de couleurs $YC_rC_b$ audit espace de couleurs $RGB$ (étape 306 et 316); et prendre ($R_{scaleGWA}$, $G_{GWA}$, $B_{scale}$) comme dit facteur d'échelle (étape 318).

A: the deflected direction of high color temperature

B: the deflected direction of low color temperature

Fig. 1

```
┌─────────┐
│  Start  │
└────┬────┘
     │
     ▼
┌──────────────────────────┐
│ White Point Detecting Unit │
└────────────┬─────────────┘
             │
             ▼
┌──────────────────────────┐
│ White Balance Judging Unit │
└────────────┬─────────────┘
             │
             ▼
┌────────────────────────────────┐
│ White Balance Adjustinging Unit │
└────────────────┬───────────────┘
                 │
                 ▼
            ┌─────────┐
            │   End   │
            └─────────┘
```

Fig. 2(PRIOR ART)

EP 1 793 584 B1

$$R_{rough} \geq P_{rough}$$

No

Yes

$$R_{precise} \geq P_{precise}$$   No

$$R_{precise} \geq P_{precise}$$   No

Yes

Yes

$M_a = 2$

$M_a = 1$

$M_a = 0$

Fig. 3(PRIOR ART)

Fig. 4

Start

Store the original image data
$I_{org} (R_{org}, G_{org}, B_{org})$   (step 102)

Apply the histogram
equalization to Image $I_{org}$   (step 104)

Covert image space form RGB to
$YC_rC_b$   (step 106)

White point detection

Fig. 5

White object

Pick up the pixel one by one form data
$I_{Hist}(Y_{Hist}, C_{rHist}, C_{bHist})$ (step 202)

$Y_{Hist} \geq 210$, and
$-3 \leq C_{rHist}, C_{bHist} \leq +3$ (step 204)

The pixel is counted as candidate white pixels (step 206)

(step 208)

Is the next pixel available? — Yes

Detect the brightest pixel $(Y_{Hist}^{bright}, C_{rHist}^{bright}, C_{bHist}^{bright})$ among the candidate white pixels? (step 210)

(step 212)

Does candidate white pixels exits? → Stop (step 214)

Calculate the average of candidate white pixels as $(Y_{Hist}^{avg}, C_{rHist}^{avg}, C_{bHist}^{avg})$ (step 216)

White point detection

Fig. 6

Detection of candidate white

Select the minimum and maximum between $Y_{Hist}^{bright}, C_{rHist}^{bright}, C_{bHist}^{bright}$ and $Y_{Hist}^{avg}, C_{rHist}^{avg}, C_{bHist}^{avg}$ as $Y_l, C_{rl}, C_{bl}$ and $Y_u, C_{ru}, C_{bu}$ respectively (step 222)

(step 224)

$Y_l \leq Y_{Hist} \leq Y_u$
$C_{rl} \leq C_{rHist} \leq C_{ru}$
$C_{bl} \leq C_{bHist} \leq C_{bu}$

(step 226)

Count current position pixel $(R_{org}, G_{org}, B_{org})$ as reference white pixels

(step 228)

Is next pixel available?

Yes

No

Calculate the average of reference white pixels as $W(R_w, G_w, B_w)$ (step 230)

White balance adjustment (step 300)

Fig. 7

White point

Calculate the first scale factors
$R_{scale}=Y_w/R_w$ , $G_{scale}=Y_w/G_w$ , $B_{scale}=Y_w/G_w$
(step302)

Calculate the second scale factors
$R_{GWA}=Y_{avg}/R_{avg}$ , $G_{GWA}=Y_{avg}/G_{avg}$ , $B_{GWA}=Y_{avg}/B_{avg}$
(step304)

Calculate the color cast
as 0,1,2,or3
(step306)

(step 308)
color cast=3 — Yes →

(step 310)
Apply the scale factors,
$R_{factor}=R_{scale}$ , $G_{factor}=G_{scale,}$
$B_{factor}=B_{GWA}$

(step 312)
color cast=2 — Yes →

(step 314)
Apply the scale factors,
$R_{factor}=R_{scale}$ , $G_{factor}=G_{GWA}$
$B_{factor}=B_{scale}$

(step 316)
color cast=1 — Yes →

(step 318)
Apply the scale factors,
$R_{factor}=R_{GWA}$ , $G_{factor}=G_{scale,}$
$B_{factor}=B_{sacle}$

No

End

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. C. CHENG ; W. H. CHAN ; Y.Q. CHEN.** Automatic White Balance for Digital Still Camera. *IEEE Transactions on Consumer Electronics,* 1995, vol. 41, 460-466

- **T. S. CHIOU.** Automatic White Balance for Digital Still Camera. *Master Thesis, Department of Computer Science and Information Engineering,* 2000